# EUROPÄISCHE PATENTSCHRIFT

(11) **EP 1 167 315 B1**
(45) Veröffentlichungstag und Bekanntmachung des Hinweises auf die Patenterteilung: **15.09.2004**
(21) Anmeldenummer: 00113019.4
(22) Anmeldetag: 21.06.2000
(51) Int. Cl.: C04B 22/12, C04B 28/02

(54) **Sulfat- und alkalifreier Abbinde- und Erhärtungsbeschleuniger**
Sulphate and alkali-free set and hardening accelerator
Accelerateur de prise et de durcissement exempt de sulfates et de metaux alcalins

(43) Veröffentlichungstag der Anmeldung: 02.01.2002
(73) Patentinhaber: Sika Schweiz AG, 8064 Zürich (CH)
(72) Erfinder: Sommer, Marcel, 8408 Winterthur (CH); Wombacher, Franz, 8917 Oberlunkhofen (CH); Bürge, Theodor A., 8954 Geroldswil (CH)
(74) Vertreter: Isler, Jörg

(56) Entgegenhaltungen:
- EP-A- 0 742 179
- DATABASE WPI Section Ch, Week 197536 Derwent Publications Ltd., London, GB; Class L02, AN 1975-59825W XP002154160 & SU 457 676 A (ODESS CIVIL ENGG), 6. März 1975 (1975-03-06)
- DATABASE WPI Section Ch, Week 198325 Derwent Publications Ltd., London, GB; Class E33, AN 1983-60864K XP002154161 & SU 948 940 A (KAUN POLY), 7. August 1982 (1982-08-07)

## Beschreibung

Die vorliegende Erfindung betrifft einen sulfat-, alkali- resp. alkalimetall- und chloridfreien Beschleuniger für das Abbinden und Erhärten eines hydraulischen Bindemittels.

Beispiele für Bindemittel, deren Abbinden und Erhärten durch Zugabe der erfindungsgemässen Beschleuniger rascher erfolgt, sind beispielsweise Zement oder hydraulischer Kalk, und Beispiele für Mischungen die derartige Bindemittel enthalten, sind Mörtel und Beton.

Anwendungsmöglichkeiten für das erfindungsgemässe Verfahren liegen in der Herstellung vorfabrizierter Elemente und dem Beschleunigen von auf der Baustelle hergestelltem Beton. Im ersten Falle kann die übliche Erhärtungsbeschleunigung durch Wärmen (Elektro- oder Ölheizung oder Dampf) verkürzt oder gar eliminiert werden. Im zweiten Falle können die Ausschalfristen für den Beton verkürzt werden oder es kann auch bei tiefer Temperatur weiter betoniert werden. Anwendungen ergeben sich auch bei der Herstellung rasch abbindender Zement- und Mörtelmischungen, speziell zum Fixieren von Fertigteilen, Gussstücken etc.

Ein besonderes Einsatzgebiet ist der Spritzmörtel und Spritzbeton. Solche Mörtel und Betone dienen zur Herstellung von Bauwerken des Hoch- und Tiefbaues sowie für den Ausbau und die Auskleidung von unterirdischen, natürlich oder künstlich geschaffenen Hohlräumen, wie Stollen-, Tunnel- oder Bergbauten, bei welchen der Beton den statischen Erfordernissen entsprechen, sowie wasserdicht sein muss. Sie dienen ebenfalls zur Konsolidierung von Baugruben, Böschungen, lockeren Felswänden etc.

Es sind bereits viele Substanzen bekannt, welche das Abbinden und Erhärten von Beton beschleunigen. Die gebräuchlichsten sind u.a. stark alkalisch reagierende Stoffe wie Alkalihydroxide, Alkalikarbonate, Alkalisilikate, Alkalialumiunate und Erdalkalichloride.

Bei den stark alkalisch reagierenden Stoffen treten unerwünschte Belästigungen des Verarbeiters auf. So können solche Produkte die Haut sehr stark verätzen und Augenentzündungen oder Hornhautverätzungen verursachen, welche die Sehfähigkeit beeinträchtigen können. Durch Einatmen des beim Verarbeiten entstehenden Staubes können auch schädliche Auswirkungen auf die Atemwege entstehen.

Betontechnologisch gesehen reduzieren stark alkalische Abbindebeschleuniger die Endfestigkeit, vergrössern das Schwinden, was zu Rissbildung führen kann und deshalb die Dauerhaftigkeit, vor allem die Sulfatbeständigkeit des Zementes, stark reduziert.

Ein wichtiger Faktor, welcher die Dauerhaftigkeit von Betonbauwerken beeinträchtigen kann ist die Spätbildung von Ettringit(im weiteren **D**elayed **E**ttringit **F**ormation (DEF) genannt). Durch die Bildung von Ettringit im erhärteten Zementsystem expandiert die Baustruktur und es entstehen so Risse oder Abplatzungen.

In der Literatur sind viele Abhandlungen über die DEF zu finden, welche eindeutig zeigen dass ein zusätzlicher Sulfatlieferant die späte Bildung von Ettringit deutlich fördert.

Die handelsüblichen Beschleuniger enthalten 15 - 25% Sulfate und stellen so eine nicht zu vernachlässigende Sulfatquelle dar.

Weiter werden in verschiedenen Normen Limitierungen für den Sulfatgehalt des Betonsystems vorgeschrieben (z.B. verlangt die Österreichische Norm (Guideline Shotcrete) einen maximalen totalen Sulfatgehalt von 4.5 Masse-% SO₃ (Summe Beschleuniger und Zemente)).

Der Abbindebeschleuniger gemäss der vorliegenden Erfindung enthält kein Sulfat mehr, verhindert somit eine zusätzliche Versorgung des Betons mit Sulfaten und trägt so nicht mehr zur DEF bei.

Beschleuniger für das Abbinden hydraulischer Bindemittel auf Basis von amorphem Aluminiumhydroxid sind bereits bekannt aus EP-A 0 026 262, insbesondere Ansprüche 1 und 11 bis 13, sowie aus Chemical Abstracts Band 86, Nummer 18, Mai 1977, Seite 300, 126087c.

Gemäss EP-A 0 026 262, Seite 2, letzter Absatz liegt die Teilchengrösse des amorphen Aluminiumhydroxids insbesondere im Bereich zwischen 4,8 und 5,4 µm.

Auch ein quellfähiges Celluloseprodukt und weitere Zusatzstoffe können in einem derartigen Erhärtungsbeschleuniger enthalten sein, vgl. EP-A 0 026 262, insbesondere Ansprüche 8 bis 10 und die Beispiele.

Aus DE-A 2 548 687, insbesondere Patentanspruch und Seite 15, ist der Zusatz von Aluminiumsulfat oder Nitraten zu Abbindebeschleunigern auf Basis von Aluminat und Aluminiumoxid bekannt.

Aus der FR-A 2 471 955, insbesondere Ansprüche 1 bis 6, sind die Verwendung von Formiaten und Nitraten in Beschleunigern bekannt.

EP 0 076 927 beschreibt ein Verfahren zur Abbindebeschleunigung durch Zusatz von amorphem Aluminiumhydroxid und wenigstens einem wasserlöslichen Sulfat und/oder Nitrat und/oder Formiat.

EP 181 739 A1 beschreibt die Verwendung von Calciumsulfoaluminat und einer Mischung von Calciumaluminaten, welche zusammen mit Alkalien oder Erdalkalien bei einem Zusatz von 250% Wasser eine aushärtbare Aufschlämmung ergeben.

JP 63 206 341 A2 schützt einen Beschleuniger aus kalziniertem Alunit, Calciumsulfoaluminat, Natriumaluminat, Natriumcarbonat.

JP 58 190 849 A2 beschreibt eine Mischung aus Calciumsulfoaluminat, Calciumsulfat-Hemihydrat und Calciumhydroxid zur Herstellung rasch abbindender, spritzbarer Beschichtungen.

SU 697 427 erwähnt einen rasch abbinden Zement durch Zusatz von Calciumaluminat, Calciumsulfoaluminat, Calciumoxid, Ferrit, Silikat und Gips.

JP 54 026 817 erwähnt die beschleunigte Aushärtung von Gips durch Zusatz von Calciumsulfoaluminat.

JP 53 099 228 beschreibt einen Beschleuniger für Vergussmörtel basierend auf Calciumsulfoaluminat und Calciumfluoroaluminat und wasserreduzierenden Mitteln.

In DE-OS 2 163 604 sind Beschleuniger auf Basis Calciumfluoraluminat erwähnt.

Aus der JP 01 290 543 A2 sind Mischungen von Calciumsulfoaluminat mit Calciumsulfat und Lithiumcarbonat als Beschleuniger bei tiefen Temperaturen bekannt.

SU 1 350 136 A1 wiederum beschreibt Klinker mit raschem Abbinden durch Zugabe von Bariumsulfat, Calciumaluminat und Calciumsulfoaluminat.

WO 97/36839 beschreibt die Verwendung von Lithiumsilikat und/oder Lithiumaluminat und/oder Aluminiumsalzen.

WO 98/18740 beinhaltet ein Verfahren zur Herstellung eines Erstarrungs- und Erhärtungsbeschleunigers für hydraulische Bindemittel. Das gemäss Anspruch 1 zwingend aus 5 Komponenten bestehende Produkt weist eine starke Trübung, eine hohe Viskosität und eine geringe Lagerstabilität auf. Dies kann zu Verstopfungen der Spritzdüsen führen. Die hohe Viskosität führt auf der Baustelle beim Dosieren des Produktes, vor allem bei tiefen Temperaturen, zu Problemen. Ein Verdünnen des Produktes ist nicht möglich, da dadurch ein Teil der basischen Salze ausgefällt wird. Der tiefe pH-Wert führt zu Korrosion an den Dosier- und Spritzeinrichtungen.

US 5,772,753 beschreibt einen Beschleuniger auf der Basis von Aluminiumhydroxid mit einem organischen Anion. Die Herstellung aus der Alkalialuminat-Lösung beinhaltet einen sehr aufwändigen Waschprozess und führt zu meist unlöslichen Aluminiumverbindungen.

Ziel der vorliegenden Erfindung war es, einen sulfat-, alkali- resp. alkalimetall- und chloridfreien Abbinde- und Erhärtungsbeschleuniger zu entwickeln, durch welchen ein äusserst rasches Abbinden erreicht werden kann.

Ein Gegenstand der vorliegenden Erfindung ist daher ein Beschleuniger für das Abbinden und Erhärten eines Bindemittels oder einer Mischung, die ein Bindemittel enthält, welcher mindestens ein wasserlösliches, fluoridhaltiges Aluminiumsalz und gegebenenfalls Komplexbildner (unter Komplexbildner werden im Rahmen der vorliegenden Erfindung Substanzen verstanden, die das Abbindeverhalten und die Stabilisierung verbessern) und/oder Amine, welche als Stabilisator wirken um eine Ausfällung von Aluminiumhydroxid zu verhindern, enthält oder daraus besteht.

Einem Bindemittel oder einem Gemisch, welches ein solches Bindemittel enthält, werden üblicherweise 0.1 bis 10 Gew.-% (bezogen auf einen flüssigen Beschleuniger mit 20 - 80 Gew.-% Wasser), bezogen auf das Gewicht dieses Bindemittels, eines sulfat-, alkali- resp. alkalimetall- und chloridfreien Abbinde- und Erhärtungsbeschleuniger zugegeben, vorzugsweise eines Beschleunigers mit ca. pH 2 - 8. Der Begriff alkalifrei resp. alkalimetallfrei wird in der vorliegenden Erfindung entsprechend diversen Normen als ≤ 1% Na₂O-Äquivalente verstanden.

Beispiele für Bindemittel, deren Erhärten und Abbinden durch das erfindungsgemässe Bindemittel resp. Verfahren beschleunigt werden können, sind Zement und hydraulischer Kalk, je alleine oder in Abmischung mit latent hydraulischen Bindemitteln oder inerten Füllstoffen, und Beispiele für Mischungen, welche diese Bindemittel enthalten, sind Mörtel und Beton.

Bevorzugte Ausführungsarten der erfindungsgemässen Abbinde- und Erhärtungsbeschleuniger sind den abhängigen Ansprüchen zu entnehmen, die auf dieses Produkt gerichtet sind, und bevorzugte Ausführungsarten des erfindungsgemässen Verfahrens werden anhand der abhängigen Verfahrensansprüche definiert.

Bevorzugte wasserlösliche, fluoridhaltige Aluminiumsalzen sind insbesondere solche, die aus Aluminiumhydroxid und/oder Aluminiumoxid und Fluorwasserstoffsäure herstellbar sind. Überraschenderweise hat sich gezeigt, dass jedes Aluminiumhydroxid zur Erzeugung geeigneter Fluoride einsetzbar ist, d.h. nicht nur amorphes sondern auch kristallines Aluminiumhydroxid. Je nach Konzentration und Menge der Fluorwasserstoffsäure kann die genaue Zusammensetzung der fluoridhaltigen Aluminiumsalze etwas schwanken. Die aus z.B. Aluminiumhydroxid und/oder Aluminiumoxid und Fluorwasserstoffsäure hergestellten Aluminiumsalze können direkt im erfindungsgemässen Beschleuniger verwendet werden oder nach Trocknung, beispielsweise Sprühtrocknung, falls ein Beschleuniger in Pulverform angestrebt wird.

Die erfindungsgemässen Beschleuniger können zusätzlich mindestens ein sulfatfreies Aluminiumsalz und/oder mindestens einen Komplexbildner und/oder mindestens ein Amin und/oder mindestens ein Verdickungsmittel enthalten.

Vorzugsweise ist das mindestens eine Aluminiumsalz ausgewählt aus der Gruppe umfassend Oxalat, Nitrat, Glykolat, Lactat, Azetat, Formiat, deren entsprechenden basischen Salze und Mischungen der genannten Salze. Der mindestens eine Komplexbildner ist vorzugsweise ausgewählt aus der Gruppe umfassend Nitrilotriessigsäure, Ethylendiamintetraessigsäure, Hydroxy- und Polyhydroxycarbonsäuren, Phosphonsäuren, Salze dieser Säuren, Polyole oder Mischungen derselben und wird insbesondere in einer Menge von 0.01 - 5 Gew.-%, bezogen auf das Gewicht eines flüssigen Beschleunigers mit Wassergehalt 20 - 80 Gew.-%, eingesetzt. Das mindestens eine Amin ist vorzugsweise ausgewählt aus der Gruppe umfassend Alkylamin und/oder Alkanolamin und wird insbesondere in einer Menge von 0.1 - 20 Gew.-%, bezogen auf das Gewicht eines flüssigen Beschleunigers mit Wassergehalt von 20 - 80 Gew.-%, eingesetzt und das mindestens eine Verdickungsmittel ist vorzugsweise ausgewählt aus der Gruppe umfassend Bentonit, Bentone, fermentierte organische Biopolymere, Alginate, Polyglykol-ether, Acrylat-, Urethanverdicker und Mischungen derselben.

Die erfindungsgemässen Beschleuniger können als Lösung, Dispersion oder pulverförmig vorliegen, wobei es bevorzugt ist, dass ein als Pulver vorliegender Beschleuniger vor der Anwendung in Wasser gelöst oder dispergiert wird.

Ein weiterer Gegenstand der vorliegenden Erfindung ist ein Verfahren zur Beschleunigung des Abbindens und Erhärtens von hydraulischen Bindemitteln sowie daraus hergestelltem Mörtel und Beton, das dadurch gekennzeichnet ist, dass man den erfindungsgemässen Beschleuniger in einer Menge von 0,1 bis 10 Gew.-% (Wassergehalt 0 - 80 Gew.-%), bezogen auf das Gewicht des hydraulischen Bindemittels, zugibt.

Der erfindungsgemässe Beschleuniger kann zur Beschleunigung des Abbindens und Erhärtens von hydraulischen Bindemitteln, hydraulischen Bindemitteln in Abmischung mit latent hydraulischen Bindemitteln oder inerten Füllstoffen, Mörtel oder Beton verwendet werden. Eine bevorzugte Verwendung erfolgt im Spritzmörtel oder Spritzbeton nach dem Trocken- oder Nass-spritzverfahren, wobei der Beschleuniger dem trockenen oder mit Wasser angemachten Bindemittel, Mörtel oder Beton in der Förderleitung, der Vorbenetzungsdüse oder der Spritzdüse, direkt in die Mischung oder ins Anmachwasser zugegeben resp. zudosiert wird. Vorzugsweise wird ein Beschleuniger in Form einer Lösung oder Dispersion mit einem Flüssigdosiergerät zudosiert, ein pulverförmiger Beschleuniger mit einem Pulverdosiergerät.

Erfindungsgemäss wird der Beschleuniger vorzugsweise hergestellt, indem das wasserlösliche, fluoridhaltige Aluminiumsalz aus Aluminiumhydroxid und Fluorwasserstoffsäure, gegebenenfalls bei erhöhter Temperatur, vor dem Zumischen allfälliger zusätzlich im Beschleuniger enthaltenen Komponenten erzeugt wird. Das Aluminiumhydroxid kann sowohl in amorpher als auch in kristalliner Form eingesetzt werden. Alternativ ist auch Aluminiumoxid als Ausgangsstoff geeignet.

Ein weiterer Gegenstand der vorliegenden Erfindung ist zudem ein härtbares resp. gehärtetes Bindemittel enthaltendes Gemisch, das den erfindungsgemässen Beschleuniger enthält.

Durch die Verwendung der erfindungsgemässen Abbinde- und Erhärtungsbeschleuniger wird ein äusserst rasches Abbinden der entsprechenden Bindemittel oder der Mischungen, die derartige Bindemittel enthalten, bewirkt, und es werden hohe Anfangs- und Endfestigkeiten erreicht. Die Abbinde- und Erhärtungsbeschleuniger wirken weder auf den Verarbeiter noch auf die Umwelt ätzend oder toxisch.

Gleichzeitig können die Kosten auf der Baustelle durch eine deutlich erhöhte Wirksamkeit und geringeren Unterhalt der Geräte sowie weniger Ausfallzeit im Vergleich zu den heutigen alkalifreien Beschleunigern gesenkt werden. Neben den technischen resultieren also auch enorme wirtschaftliche Vorteile.

Da die erfindungsgemässen Abbindebeschleuniger keine Alkalien enthalten, werden weder die Festigkeitsentwicklung noch das Schwinden negativ beeinflusst.

Die folgenden Beispiele erläutern die Erfindung.

### Beispiele

Beschleuniger bestehend aus:

| **Nr.** | **Komponente** | **Massen %** |
|---|---|---|
| 1 | Wasser | 55 |
| | Aluminiumhydroxid | 12 |
| | Fluorwasserstoffsäure 40% | 25 |
| | Komplexbildner* | 0.5 |
| | Amin ** | 7.5 |

| **Nr.** | **Komponente** | **Massen %** |
|---|---|---|
| 2 | Wasser | 25 |
| | Aluminiumhydroxid | 10 |
| | Aluminiumnitrat · 9 H₂O | 40 |
| | Fluorwasserstoffsäure 40% | 20 |
| | Komplexbildner* | 0.5 |
| | Amin *** | 4.5 |

| **Nr.** | **Komponente** | **Massen %** |
|---|---|---|
| **3** | Wasser | 61.5 |
| | Aluminiumhydroxid | 13 |
| | Fluorwasserstoffsäure 40% | 25 |
| | Komplexbildner* | 0.5 |

| | | |
|---|---|---|
| * = Ethylendiamin-tetraessigsäure | | |
| ** = Diethanolamin | | |
| *** = Methyldiethanolamin | | |

wurden in den folgenden Beispielen mit einem herkömmlichen, käuflichen Beschleuniger verglichen.

In den folgenden Beispielen wird der Einfluss der erfindungsgemässen Abbindebeschleuniger auf zementöse Systeme dargestellt. Als Prüfmischungen wurden Mörtel gewählt, die den Beton simulieren sollen. Die Mischungen setzten sich wie folgt zusammen:

| | |
|---|---|
| Portlandzement Typ CEM I 42.5 | 250.00 g |
| Sand 0- 2.2 mm | 750.00 g |
| Wasser | 122.50 g |
| Superverflüssiger auf Melaminbasis | 2.50 g |

Die Abbindeproben wurden mit einem Penetrometer der Firma RMU (Italien) bestimmt. Abbindebeginn und -ende wurden bei einem Eindringwiderstand der 2 mm Nadel von 600 g bzw. 2200 g abgelesen.

Effekt eines erfindungsgemässen Abbindebeschleunigers im Vergleich zu einem herkömmlichen sulfathaltigen, alkali- und chloridfreien Beschleuniger auf die Abbindezeit.

| **Beschleuniger** | **Eindringwiderstand** | |
|---|---|---|
| | **Abbindebeginn** | **Abbindeende** |
| Erfindungsgemässer Beschleuniger Nr. 1 | 6 min. | 20 min. |
| Erfindungsgemässer Beschleuniger Nr. 2 | 17 min. | 43 min. |
| Erfindungsgemässer Beschleuniger Nr. 3 | 12 min. | 38 min. |
| Herkömmlicher käuflicher Beschleuniger | 30 min. | 65 min. |
| Beschleuniger = 6% auf die Zementmasse bezogen Herkömmlicher, käuflicher Beschleuniger = wässerige Lösung auf Basis Aluminiumsulfatformiat | | |

Die deutlich verbesserte resp. tiefere Viskosität des erfindungsgemässen Beschleunigers wird gegenüber dem herkömmlichen Abbindebeschleuniger deutlich gemacht. Die Viskosität wurde mittels der Auslaufzeit aus einem DIN Fordbecher ⌀ 4 mm gemessen.

| **Beschleuniger** | **Auslauf zeit (20°C)** |
|---|---|
| Erfindungsgemässer Beschleuniger Nr. 1 | 18 sec. |
| Erfindungsgemässer Beschleuniger Nr. 2 | 20 sec. |
| Erfindungsgemässer Beschleuniger Nr. 3 | 15 sec. |
| Herkömmlicher käuflicher Beschleuniger | 28 sec. |

Im Vergleich zum herkömmlichen Beschleuniger liegen die Werte der Auslaufzeit des erfindungsgemässen Beschleunigers deutlich tiefer.

## Patentansprüche

1. Sulfat-, alkalimetall- und chloridfreier Abbinde- und Erhärtungsbeschleuniger für hydraulische Bindemittel **dadurch gekennzeichnet, dass** er mindestens ein wasserlösliches fluoridhaltiges Aluminiumsalz enthält oder daraus besteht und dass der Abbinde- und Erhärtungsbeschleuniger ein flüssiger Beschleuniger mit einem Wassergehalt von 20 - 80 Gew.-% ist.

2. Beschleuniger nach Anspruch 1, **dadurch gekennzeichnet, dass** das wasserlösliche fluoridhaltige Aluminiumsalz erhältlich ist durch Reaktion von amorphem oder kristallinem Aluminiumhydroxid und/oder Aluminiumoxid mit Fluorwasserstoffsäure.

3. Beschleuniger nach Anspruch 1 oder 2, **dadurch gekennzeichnet, dass** er zusätzlich mindestens ein Aluminiumsalz, ausgewählt aus der Gruppe umfassend Oxalat, Nitrat, Glykolat, Lactat, Azetat, Formiat, deren entsprechenden basischen Salze und Mischungen der genannten Salze, enthält.

4. Beschleuniger nach einem der Ansprüche 1 bis 3, **dadurch gekennzeichnet, dass** er mindestens einen Komplexbildner, ausgewählt aus der Gruppe umfassend Nitrilotriessigsäure, Ethylendiamintetraessigsäure, Hydroxy- und Polyhydroxycarbonsäuren, Phosphonsäuren, Salze dieser Säuren oder Mischungen derselben in einer Menge von 0.01 - 5 Gew.-%, bezogen auf das Gewicht eines flüssigen Beschleunigers mit Wassergehalt von 20 - 80 Gew.-%, enthält.

5. Beschleuniger nach einem der Ansprüche 1 bis 4, **dadurch gekennzeichnet, dass** er mindestens ein Amin, ausgewählt aus der Gruppe umfassend Alkylamin und/oder Alkanolamin in einer Menge von 0.1 - 20 Gew.-%, bezogen auf das Gewicht eines flüssigen Beschleunigers mit Wassergehalt von 20 - 80 Gew.-%, enthält.

6. Beschleuniger nach einem der Ansprüche 1 bis 5, **dadurch gekennzeichnet, dass** er mindestens ein Verdickungsmittel, ausgewählt aus der Gruppe umfassend Bentonit, Bentone, fermentierte organische Biopolymere, Alginate, Polyglykolether, Acrylat-, Urethanverdicker, und Mischungen derselben, enthält.

7. Beschleuniger nach einem der Ansprüche 1 bis 6, **dadurch gekennzeichnet, dass** er als Lösung oder als Dispersion vorliegt.

8. Verwendung des Beschleuniger nach einem der Ansprüche 1 bis 7, **dadurch gekennzeichnet, dass** ein als Pulver vorliegender Beschleuniger vor der Anwendung in Wasser gelöst oder dispergiert wird.

9. Verfahren zur Beschleunigung des Abbindens und Erhärtens von hydraulischen Bindemitteln sowie daraus hergestelltem Mörtel und Beton, **dadurch gekennzeichnet, dass** man den Beschleuniger nach einem der Ansprüche 1 bis 7, in einer Menge von 0,1 bis 10 Gew.-%, bezogen auf einen flüssigen Beschleuniger mit 20 - 80 Gew.-% Wasser, bezogen auf das Gewicht des hydraulischen Bindemittels, zugibt.

10. Verwendung des Beschleunigers nach einem der Ansprüche 1 bis 7 zur Beschleunigung des Abbindens und Erhärtens von hydraulischen Bindemitteln, hydraulischen Bindemitteln in Abmischung mit latent hydraulischen Bindemitteln oder inerten Füllstoffen, Mörtel oder Beton.

11. Verwendung des Abbinde- und Erhärtungsbeschleunigers nach einem der Ansprüche 1 bis 7 im Spritzmörtel oder Spritzbeton nach dem Trocken- oder Nass-spritzverfahren, wobei der Beschleuniger dem trockenen oder mit Wasser angemachten Bindemittel, Mörtel oder Beton in der Förderleitung, der Vorbenetzungsdüse oder der Spritzdüse, in flüssiger oder dispergierter Form mit einem Flüssigdosiergerät, in Pulverform mit einem Pulverdosiergerät, direkt in die Mischung oder ins Anmachwasser zugegeben wird.

12. Verfahren zur Herstellung eines Beschleunigers nach einem der Ansprüche 1 bis 7, **dadurch gekennzeichnet, dass** das wasserlösliche, fluoridhaltige Aluminiumsalz aus amorphem oder kristallinem Aluminiumhydroxid und/oder Aluminiumoxid und Fluorwasserstoffsäure, gegebenenfalls bei erhöhter Temperatur, entweder vor dem Zumischen anderer Komponenten oder während dem Vermischen allfälliger zusätzlich im Beschleuniger enthaltenen Komponenten erfolgt.

13. Hydraulisches Bindemittel enthaltendes Gemisch, **dadurch gekennzeichnet, dass** es den Beschleuniger nach einem der Ansprüche 1 bis 7 enthält.

## Claims

1. Sulphate-, alkali metal- and chloride-free setting and curing accelerator for hydraulic binders, **characterized in that** it contains or consists of at least one water-soluble fluoride-containing aluminium salt and the setting and curing accelerator is a liquid accelerator having a water content of 20-80% by weight.

2. Accelerator according to Claim 1, **characterized in that** the water-soluble fluoride-containing aluminium salt is obtainable by reaction of amorphous or crystalline aluminium hydroxide and/or aluminium oxide with hydrofluoric acid.

3. Accelerator according to Claim 1 or 2, **characterized in that** it additionally contains at least one aluminium salt selected from the group consisting of oxalate, nitrate, glycolate, lactate, azetate, formate, their corresponding basic salts and mixtures of the salts mentioned.

4. Accelerator according to any of Claims 1 to 3, **characterized in that** it contains at least one complexing agent selected from the group consisting of nitrilotriacetic acid, ethylenediaminetetraacetic acid, hydroxycarboxylic and polyhydroxycarboxylic acids, phosphonic acids, salts of these acids or mixtures thereof in an amount of 0.01-5% by weight, based on the weight of a liquid accelerator having a water content of 20-80% by weight.

5. Accelerator according to any of Claims 1 to 4, **characterized in that** it contains at least one amine selected from the group consisting of alkylamine and/or alkanolamine in an amount of 0.1-20% by weight, based on the weight of a liquid accelerator having a water content of 20-80% by weight.

6. Accelerator according to any of Claims 1 to 5, **characterized in that** it contains at least one thickener selected from the group consisting of bentonite, bentones, fermented organic biopolymers, alginates, polyglycol ethers, acrylate thickeners, urethane thickeners and mixtures thereof.

7. Accelerator according to any of Claims 1 to 6, **characterized in that** it is in the form of a solution or a dispersion.

8. Use of the accelerator according to any of Claims 1 to 7, **characterized in that** a pulverulent accelerator is dissolved or dispersed in water before use.

9. Method of accelerating the setting and curing of hydraulic binders and mortar and concrete produced therefrom, **characterized in that** the accelerator according to any of Claims 1 to 7 is added in an amount of from 0.1 to 10% by weight, based on a liquid accelerator containing 20-80% by weight of water, based on the weight of the hydraulic binder.

10. Use of the accelerator according to any of Claims 1 to 7 for accelerating the setting and curing of hydraulic binders, hydraulic binders mixed with latently hydraulic binders or inert fillers, mortar or concrete.

11. Use of the setting and curing accelerator according to any of Claims 1 to 7 in spray mortar or spray concrete applied by the dry-spraying or wet-spraying method, where the accelerator is added to the dry binder, mortar or concrete or the binder, mortar or concrete made up with water in the transport line, the prewetting nozzle or the spray nozzle, in liquid or dispersed form by means of a liquid metering apparatus, in powder form by means of a powder metering apparatus, directly into the mixture or into the make-up water.

12. Process for preparing an accelerator according to any of Claims 1 to 7, **characterized in that** the water-soluble, fluoride-containing aluminium salt is prepared from amorphous or crystalline aluminium hydroxide and/or aluminium oxide and hydrofluoric acid, if desired at elevated temperature, either before the mixing in of other components or during the mixing of any other components additionally present in the accelerator.

13. Mixture containing hydraulic binder, **characterized in that** it contains the accelerator according to any of Claims 1 to 7.

## Revendications

1. Accélérateur de prise et de durcissement exempt de sulfate, de métal alcalin et de chlorure pour des liants hydrauliques, **caractérisé en ce qu'**il contient au moins un sel d'aluminium soluble dans l'eau, contenant du fluorure, ou est constitué par celui-ci et **en ce que** l'accélérateur de liaison et de durcissement est un accélérateur liquide présentant une teneur en eau de 20 à 80% en poids.

2. Accélérateur selon la revendication 1, **caractérisé en ce que** le sel d'aluminium soluble dans l'eau, contenant du fluorure, peut être obtenu par réaction d'hydroxyde d'aluminium amorphe ou cristallin et/ou d'oxyde d'aluminium avec de l'acide fluorhydrique.

3. Accélérateur selon la revendication 1 ou 2, **caractérisé en ce qu'**il contient en plus au moins un sel d'aluminium, choisi dans le groupe comprenant l'oxalate, le nitrate, le glycolate, le lactate, l'acétate, le formiate, leurs sels basiques correspondants et les mélanges des sels mentionnés.

4. Accélérateur selon l'une quelconque des revendications 1 à 3, **caractérisé en ce qu'**il contient au moins un complexant, choisi dans le groupe comprenant l'acide nitrilotriacétique, l'acide éthylènediaminetétraacétique, les acides hydroxycarboxyliques et polyhydroxycarboxyliques, les acides phosphoniques, les sels de ces acides ou les mélanges de ceux-ci en une quantité de 0,01 à 5% en poids, par rapport au poids d'un accélérateur liquide présentant une teneur en eau de 20 à 80% en poids.

5. Accélérateur selon l'une quelconque des revendications 1 à 4, **caractérisé en ce qu'**il contient au moins une amine, choisie dans le groupe comprenant les alkylamines et/ou les alcanolamines en une quantité de 0,1 à 20% en poids par rapport au poids d'un accélérateur liquide présentant une teneur en eau de 20 à 80% en poids.

6. Accélérateur selon l'une quelconque des revendications 1 à 5, **caractérisé en ce qu'**il contient au moins un épaississant choisi dans le groupe comprenant la bentonite, les bentones, les biopolymères organiques fermentés, les alginates, les polyglycoléthers, les épaississants d'acrylate et d'uréthanne et les mélanges de ceux-ci.

7. Accélérateur selon l'une quelconque des revendications 1 à 6, **caractérisé en ce qu'**il se trouve sous forme de solution ou de dispersion.

8. Utilisation de l'accélérateur selon l'une quelconque des revendications 1 à 7, **caractérisée en ce qu'**un accélérateur se trouvant sous forme de poudre est dissous ou dispersé dans de l'eau avant utilisation.

9. Procédé pour accélérer la prise et le durcissement de liants hydrauliques ainsi que du mortier et béton préparé à partir de ceux-ci, **caractérisé en ce qu'**on ajoute l'accélérateur selon l'une quelconque des revendications 1 à 7, en une quantité de 0,1 à 10% en poids par rapport à un accélérateur liquide contenant 20 à 80% en poids d'eau par rapport au poids du liant hydraulique.

10. Utilisation de l'accélérateur selon l'une quelconque des revendications 1 à 7 pour accélérer la prise et le durcissement de liants hydrauliques, de liants hydrauliques en mélange avec des liants hydrauliques latents ou des charges inertes, de mortier ou de béton.

11. Utilisation de l'accélérateur de prise et de durcissement selon l'une quelconque des revendications 1 à 7 dans le mortier ou le béton à projeter selon le procédé de projection à sec ou humide, l'accélérateur étant ajouté au liant, au mortier ou au béton, sec ou gâché avec de l'eau, dans la conduite de transport, le gicleur de prémouillage ou le gicleur de pulvérisation, sous forme liquide ou dispersée avec un appareil de dosage liquide, sous forme de poudre avec un appareil de dosage de poudre, directement dans le mélange ou dans l'eau de gâchage.

12. Procédé pour la préparation d'un accélérateur selon l'une quelconque des revendications 1 à 7, **caractérisé en ce que** le sel d'aluminium soluble dans l'eau, contenant du fluorure, constitué d'hydroxyde d'aluminium amorphe ou cristallin et/ou d'oxyde d'aluminium et d'acide fluorhydrique, est produit, le cas échéant à température élevée, avant le mélange d'autres composants ou pendant le mélange des composants éventuellement contenus en plus dans l'accélérateur.

13. Mélange contenant un liant hydraulique, **caractérisé en ce qu'**il contient l'accélérateur selon l'une quelconque des revendications 1 à 7.
